# EUROPEAN PATENT SPECIFICATION

(11) **EP 0 864 342 B1**
(45) Date of publication and mention of the grant of the patent: **16.07.2003**
(21) Application number: 98200216.4
(22) Date of filing: 26.01.1998
(51) Int. Cl.: A63F 9/24

(54) **A method and apparatus for operating a video game with backfeeding a video image of a player**
Vorrichtung und Verfahren zum Betreiben eines Videospiels mit Einspielen eines Videobildes eines Spielers
Procédé et dispositif pour la mise en oeuvre d'un jeu vidéo avec insertion d'une image vidéo d'un joueur

(30) Priority: 14.02.1997 EP 97200421
(43) Date of publication of application: 16.09.1998
(73) Proprietor: Koninklijke Philips Electronics N.V., 5621 BA Eindhoven (NL)
(72) Inventor: D'Achard van Enschut, Johannes Franciscus Martinus, Prof. Holstlaan 6, 5656 AA Eindhoven (NL)
(74) Representative: Groenendaal, Antonius Wilhelmus Maria

(56) References cited:
- EP-A- 0 661 658
- EP-A- 0 737 496
- GB-A- 2 287 374
- US-A- 4 521 014
- US-A- 4 710 873
- PATENT ABSTRACTS OF JAPAN vol. 018, no. 495 (C-1250), 16 September 1994 & JP 06 165879 A (SEGA ENTERP LTD), 14 June 1994,
- PATENT ABSTRACTS OF JAPAN vol. 018, no. 495 (C-1250), 16 September 1994 & JP 06 165874 A (SEGA ENTERP LTD), 14 June 1994,

## Description

### BACKGROUND OF THE INVENTION

The invention relates to a method for operating a multi-player video game.

A method of this kind is known from GB 2,205,188. Generally, the game may be an arcade game, a PC-based game that gets its software on a local CD-ROM player, or a network-based game that operates off-line and get its software through downloading. Various other configurations of such gaming environment are feasible. In a network environment, the game may be conducted off-line with a single player, off-line with multiple players, or even on-line with multiple players. The realization of the environment may be as conventional as a fruit machine, or high tech through using virtual reality features.

Various people have seen the advantage of rewarding players in video games with the presentation of their identity. The above reference uses a printed ticket for outputting the name of a player alone or in combination with an attained score. The present invention has recognized that present day technology can attain a much higher degree of liveliness, especially in view of falling prices of various devices. In particular, video aspects of such a gaming environment have been experienced as being interesting to user persons.

### SUMMARY TO THE INVENTION

Amongst other things, it is therefore an object to present the player with a lifelike or video image of him or herself.

This object is solved by the invention which is defined by the appended claims.

Compared with the remaining elements of the gaming environment that often comprise a great amount of electromechanical hardware, the price of a camera has fallen dramatically. Furthermore, confrontation of a player with a currently high-scoring player's image being displayed in the actual gaming environment, has been felt as extremely tantalizing. The nature of the image may be a photograph or even a dynamic clip of the currently high-scoring player.

Advantageously, the invention comprises a ranking step among players in respectively successive playing sessions, and displaying images of high-ranking players in a relatively persistent manner with respect to subsequent playing sessions. In this manner, competition among various players is raised still further. Top players could have a display that is persistent over a relatively long period, such as one day or even one week.

Advantageously, the video image is made part of a composite image together with selective items taken from memory. Such item could relate to a characteristic attire worn in the real-life counterpart of the game, such as a space suit, or a particular interesting person related or not to the gaming environment in question, such as President Clinton or movie star Demi Moore.

Advantageously, the player person is allowed to suppress during the session a presentation of said actual score and/or performance to said backfeeding mechanism. This allows a person to remain anonymous if required; the realization can be effected through answering a system question by a keyboard command.

The invention also relates to a video game arranged for practising the above method. Further advantageous aspects of the invention are recited in dependent Claims.

### BRIEF DESCRIPTION OF THE DRAWING

These and other aspects and advantages of the invention will be discussed more in detail with reference to the disclosure of preferred embodiments hereinafter, and in particular with reference to the Figures wherein:
Figure 1 is a block diagram of a multi-player environment;
Figure 2 is an instantaneous representation of a game image together with a player image.

### DETAILED DESCRIPTION OF PREFERRED EMBODIMENTS

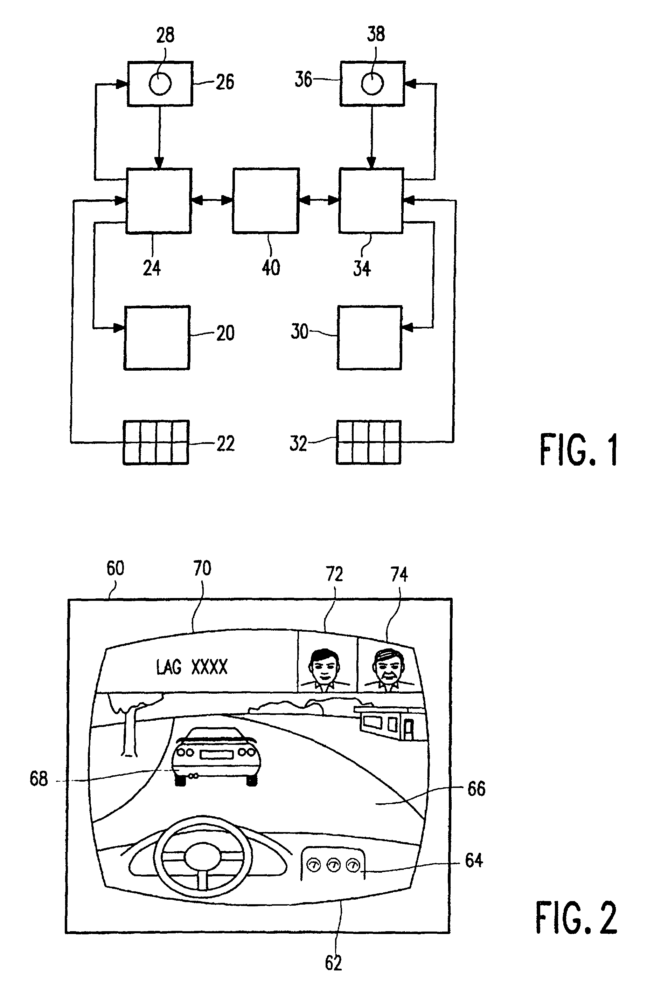

Figure 1 is a block diagram of a multi-player environment. At left is the setup for the first player person. Here, item 22 symbolizes the user interface. As shown, it is a multikey-keyboard. However, various other such interfaces have become known, such as a joystick, a steering wheel, an electronic pinball interface as recited in US Application Serial No. 08/823,577 (PHN 15.755) to the present assignee. In particular, the interface may be bidirectional. The signals from the user interface are sent to the local processing device 24. This local processing device generates an image on display 20. Furthermore, it sends a control signal to local camera arrangement 26 that is focused through lens 28 on the local player, or at least on a position where this player is supposed to be. The camera is attached for sending the image information to local processing device 24. Now, in a stand-alone setup the processing device 24 calculates the score of the player. This score may represent the number of hits in a shooting game, the number of points and/or jackpot hits in a pinball machine environment, or other scores as applicable. In certain circumstances, including the gaining of a particular number of points, processing device 24 transmits a command to camera 26 so that an image of the player is captured through appropriate focus and direction of lens 28. The image signals are digitized and transferred to central processing device 24 for more or less persistent storage in local memory that has not been shown separately. If the player would object against taking this image, at the beginning of the gaming session an appropriate command must be given upon a machine-generated question.

In a subsequent gaming session, the image so taken up can be displayed on display 20, for example, at the start of the session, or rather, during the evolution of the game as specified in the gaming rules. In case a plurality of pictures have been taken up during successive gaming sessions the processing device 24 through some kind of ranking mechanism may give preference to the image of a particular player in favour of other images. The ranking mechanism may be permanent, for example in that always the top player of the last week has his image displayed. Other ranking strategies could introduce some random character in that the selection is made among a plurality of images.

At right in the Figure a similar setup is shown with corresponding items 30, 32, 34, 36 and 38. First, this second game could also represent a stand-alone environment. Alternatively, competition between two simultaneous players could be introduced in that the two processing devices 24 and 34 are joined through some interconnection mechanism 40. The latter could be a local network, an interconnection to the Internet system or any appropriate item. Now, the two gaming sessions can be joined to each other, for example, in a racing duel. The camera takes up the images of the driver that actually leads the pack, for display on all displays 20, 30. An alternative is that the images may actually figure in the game in that they actually become part of the game. For example, in a boxing game, the highest ranking player of a recent past could be superposed to the image of the actual player's opponent.

Figure 2 is an actual image of a racing game. The display device 60 has been shown with the actual image screen 62 in its centre. The image first contains the dashboard 64 of the driver (=player) in question. In front of the actual car the road 66 to be taken has been shown. Far out in front can be seen the car 68 of the driver that leads the pack. In the upper part of the screen, that may have a different aspect ratio from the one shown here, various game parameters are displayed. First, field 70 shows the lag of the driver in question behind the leading driver, second field 72 shows an image of the face of the driver who is actually in front, and field 74 shows the driver that has covered the overall racing circuit in the shortest time. If the present player himself is actually leading the pack, either the field for the image of the leading driver is empty, or the image of the actual driver is displayed.

At the end of the session, the image of the victorious driver may be printed, together with a textual identifier such as name or initials, and further relevant data, such as actual score, calender date, names of other players and their respective scores, etcetera. A particular feature is to join the image of the victorious driver with another image, or even a clip taken from memory. By itself, the joining of images into a single picture is known technology, that is made easier and more natural if the camera through good focusing creates an image that has a well-defined circumference, so that a particular "hole" may be filled with an image taken from memory. The printing may be on paper or similar material, or even on a CD-ROM rewritable, if the game program had been provided on such support. The printing may be effected remotely, such as on only one of the networked terminals of Figure 1. If applicable, the display may be in the form of a short movie fragment or so-called clip.

## Claims

1. A method for operating a multi-player video game, the method comprising:
enabling each player of multiple players to interact with a gaming environment (64),
machine-detecting a score and/or performance of each player in a particular session of the video game,
automatically capturing and backfeeding into the gaming environment a video image (72) of a currently high-scoring player during the particular session of the video game, and
dynamically displaying the gaming environment (62), and the video image (72) of the currently high-scoring player of the multiple players in a visible prominent location, during the particular session of the video game.

2. A method as claimed in Claim 1, furthermore comprising
ranking high-scoring players in respectively successive playing sessions, and
providing a representation of one or more of the high-ranking players for display in subsequent playing sessions, based on the ranking.

3. A method as claimed in Claim 1, wherein the video image of select players of the multiple players is made part of a composite image with one or more selected items taken from memory.

4. A method as claimed in Claim 1, further allowing the player to suppress during the session a presentation (70) of the actual score, performance and/or video image to the backfeeding.

5. A video game system being arranged for running a multi-player video gaming environment, comprising
a user interface (22, 34) that is configured to enable each player of multiple players to interact with the gaming environment,
a detector (24, 34) that is configured to detect a score and/or performance of each player during a particular session of the video game,
a backfeeding device (24, 34) that is configured to:
automatically capture and backfeed into the gaming environment a video image (72) of a currently high-scoring player of the multiple players during the particular session of the video game, and
a display (10, 30) that is configured to dynamically display the gaming environment, and the video image (72) of the currently high-scoring player in a visible prominent position, during the particular session of the video game, and
one or more cameras (26, 36) that are configured to provide the video image of each player.

6. A system as claimed in Claim 5, furthermore comprising ranking means (24, 39) for relatively ranking players in respectively successive playing sessions, and control means fed by said ranking means for providing images of the high-ranking players to subsequent playing sessions.

7. A system as claimed in Claim 6, arranged for implementing a multiple player gaming environment, and having cross-wise communication means for selectively cross-wise backfeeding said video image to said multiple players.

## Patentansprüche

1. Verfahren zum Betreiben eines Multiplayer-Videospiels, wobei dieses Verfahren die nachfolgenden Verfahrensschritte umfasst:
- jedem Spieler einer Vielzahl von Spielern die Möglichkeit bieten, mit einer Spielumgebung (64) interaktiv zu sein,
- das Maschinen-Detektieren einer Punktzahl und/oder Leistung jedes Spielers in einer bestimmten Session des Videospiels,
- das automatische Einfangen und in die Spielumgebung Einspeisen eines Videobildes (72) eines zu dem betreffenden Zeitpunkt "führenden" Spielers während der betreffenden Session des Videospiels, und
- das Wiedergeben der Spielumgebung (62) und des Videobildes (72) des zu dem betreffenden Zeitpunkt "führenden" Spielers der Vielzahl von Spielern an einer sichtbaren prominenten Stelle während der betreffenden Session des Videospiels.

2. Verfahren nach Anspruch 1, wobei dieses Verfahren weiterhin die nachfolgenden Verfahrensschritte umfasst:
- das in einer Liste Aufnehmen "führender" Spieler in betreffenden erfolgreichen Spielsessionen, und
- das Erzeugen einer Darstellung eines oder mehrerer "führender" Spieler zur Wiedergabe in nachfolgenden Spielsessionen, und zwar auf Basis der Rangliste.

3. Verfahren nach Anspruch 1, wobei das Videobild selektierter Spieler der vielen Spieler zu einem Teil eines zusammengesetzten Bildes gemacht wird, wobei ein oder mehrere Items dem Speicher entnommen werden.

4. Verfahren nach Anspruch 1, wobei weiterhin dem Spieler die Möglichkeit geboten wird, während der Session eine Darstellung (70) der aktuellen Punktzahl, der Leistung und/oder des Videobildes zu der Einspeisung zu unterdrücken.

5. Videospielsystem, vorgesehen zum Durchführen einer Multiplayer-Spielumgebung, wobei dieses System die nachfolgenden Elemente umfasst:
- eine Benutzer-Schnittstelle (22, 34), die derart konfiguriert ist, dass jedem Spieler von vielen Spielern die Möglichkeit geboten wird, mit der Spielumgebung interaktiv zu sein,
- einen Detektor (24, 34), der konfiguriert ist zum Detektieren einer Punktzahl und/oder einer Leistung jedes Spielers während einer bestimmten Session des Videospiels,
- eine Einspeisungsanordnung (24, 34), die dazu konfiguriert ist:
- ein Videobild (72) eines zu dem betreffenden Zeitpunkt "führenden" Spielers der vielen Spieler während der betreffenden Session des Videospiels automatisch einzufangen und in die Spielumgebung einzuspeisen, und
- eine Wiedergabeanordnung (10, 30), die dazu konfiguriert ist, die Spielumgebung sowie das Videobild (72) des zu dem betreffenden Zeitpunkt "führenden" Spielers an einer sichtbaren, auffälligen Stelle während der betreffenden Session des Videospiels wiederzugeben, und
- eine oder mehrere Kameras (26, 36), die dazu konfiguriert sind, das Videobild jedes Spielers zu erzeugen.

6. System nach Anspruch 5, weiterhin mit Ranglistenmitteln (24, 39) um Spieler in betreffenden aufeinander folgenden Spielsessionen relativ in eine Rangordnung aufzunehmen, und mit Steuermitteln, die von den genannten Ranglistenmitteln gespeist werden zum Erzeugen von Bildern der "führenden" Spieler für nachfolgende Spielsessionen.

7. System nach Anspruch 6, vorgesehen zum Implementieren einer Multiplayer-Spielumgebung und mit kreuzweisen Kommunikationsmitteln zum selektiven kreuzweisen Einspeisen des genannten Videobildes zu den genannten vielen Spielern.

## Revendications

1. Procédé pour faire fonctionner un jeu vidéo pour plusieurs joueurs, le procédé comprenant les éléments suivants :
permettre à chaque joueur parmi plusieurs joueurs d'interagir avec un environnement de jeu (64);
détecter par machine un score et/ou une prestation de chaque joueur dans une session particulière du jeu vidéo ;
capturer et insérer automatiquement dans l'environnement de jeu une image vidéo (72) d'un joueur ayant obtenu le meilleur score pendant la session particulière du jeu vidéo, et
afficher l'environnement de jeu (62) et l'image vidéo (72) du joueur ayant obtenu le meilleur score parmi les plusieurs joueurs dans un endroit bien en vue pendant la session particulière du jeu vidéo.

2. Procédé suivant la revendication 1, comprenant en outre les éléments suivants :
classer les joueurs ayant obtenu les meilleurs scores dans des sessions de jeu successives, et
fournir une représentation d'un ou de plusieurs des joueurs les mieux classés pour affichage dans des sessions de jeu suivantes sur la base du classement.

3. Procédé suivant la revendication 1, dans lequel l'image vidéo de joueurs spécifiques parmi les plusieurs joueurs est intégrée dans une image composite avec un ou plusieurs éléments spécifiques extraits de la mémoire.

4. Procédé suivant la revendication 1, permettant en outre au joueur de supprimer au cours de la session une présentation (70) du score en cours, de la prestation et/ou une image vidéo de l'insertion.

5. Système de jeu vidéo propre à exécuter un environnement de jeu vidéo pour plusieurs joueurs, comprenant :
une interface utilisateur (22, 34) qui est configurée pour permettre à chaque joueur parmi plusieurs joueurs d'interagir avec l'environnement de jeu ;
un détecteur (24, 34) qui est configuré pour détecter un score et/ou une prestation de chaque joueur pendant une session particulière du jeu vidéo ;
un dispositif d'insertion (24, 34) qui est configuré pour :
capturer et insérer automatiquement dans l'environnement de jeu une image vidéo (72) d'un joueur ayant obtenu le meilleur score parmi les plusieurs joueurs pendant la session particulière du jeu vidéo, et
un afficheur (10, 30) qui est configuré pour afficher l'environnement de jeu et l'image vidéo (72) du joueur ayant obtenu le meilleur score dans une position bien en vue pendant la session particulière du jeu vidéo, et
une ou plusieurs caméras (26, 36) qui sont configurées pour fournir l'image vidéo de chaque joueur.

6. Système suivant la revendication 5, comprenant en outre un moyen de classement (24, 39) pour classer les uns par rapport aux autres des joueurs de sessions de jeu successives et un moyen de commande alimenté par ledit moyen de classement pour fournir des images des joueurs les mieux classés pour des sessions de jeu suivantes.

7. Système suivant la revendication 6, propre à mettre en oeuvre un environnement de jeu pour plusieurs joueurs et comprenant un moyen de communication croisée pour insérer sélectivement de manière croisée ladite image vidéo auxdits plusieurs joueurs.
